# EUROPEAN PATENT SPECIFICATION

(11) **EP 2 751 396 B1**
(45) Date of publication and mention of the grant of the patent: **20.04.2016**
(21) Application number: 12806066.2
(22) Date of filing: 13.11.2012
(51) Int. Cl.: F01M 1/00, F02F 3/22, F16N 7/36

(54) **LUBRICATION ARRANGEMENT**
SCHMIERANORDNUNG
DISPOSITIF DE GRAISSAGE

(30) Priority: 09.11.2011 FI 20116108
(43) Date of publication of application: 09.07.2014
(73) Proprietor: Wärtsilä Finland Oy, 65380 Vaasa (FI)
(72) Inventor: NURMI, Hannu, FI-65380 Vaasa (FI)
(74) Representative: Berggren Oy Ab
(86) International application number: PCT/FI2012/051105
(87) International publication number: WO 2013/068655

(56) References cited:
- JP-A- 10 176 599
- JP-A- 55 109 743
- JP-A- 2002 250 211
- JP-A- 2006 214 298

## Description

### Technical field of the invention

The present invention relates to a lubrication arrangement for the skirt of a piston of an internal combustion engine according to the preamble of claim 1.

### Background of the invention

In large low speed and medium speed internal combustion engines, lubrication of the piston skirt is usually implemented by utilizing the cooling oil of the piston, or by splashing oil from the crank mechanism. In one type of piston lubrication arrangements, cooling oil is introduced into a cooling oil gallery inside the crown of the piston through cooling oil channels that are arranged inside the connecting rod, gudgeon pin, and the piston. The same cooling oil is used for piston skirt lubrication and fed through drillings from the cooling oil channels into a lubrication groove that is arranged on the outer surface of the piston skirt. Pressurized lubrication oil can thus be introduced between the piston and the cylinder liner when the piston is near top dead center and the combustion pressure affects the piston, and the load against the cylinder liner is thus at its highest.

JP 2002250211 shows such a system.

Pistons of many high speed engines, and also pistons of some medium speed engines, are cooled by so called jet cooling arrangements, where the cooling oil is sprayed onto the bottom surface of the piston, from where it flows into the cooling oil gallery inside the piston. A problem of these jet cooling arrangements is that since there is no controlled and pressurized oil feeding, the lubrication is difficult to arrange so that the lubrication of the piston skirt takes place near top dead center.

### Summary of the invention

The object of the present invention is to provide an improved lubrication arrangement for the skirt of a piston of an internal combustion engine. The characterizing features of the lubrication arrangement according to the invention are given in the characterizing part of claim 1.

A lubrication arrangement according to the present invention comprises a cooling oil gallery that is arranged inside the piston, a lubrication groove that is arranged on the outer surface of the piston skirt, at least one oil channel for supplying lubrication oil into the lubrication groove, at least one oil chamber that is arranged inside the piston below the cooling oil gallery, and an oil delivery duct for establishing fluid communication between the cooling oil gallery and the oil chamber. The inlet of the oil channel that supplies lubrication oil into the lubrication groove is arranged in the oil chamber above the outlet of the oil delivery duct.

With a lubrication arrangement according to the invention, mass forces push lubrication oil from the cooling oil gallery into the oil chamber when the piston is in decelerating movement downwards or in accelerating movement upwards, i.e. close to bottom dead center. When the piston is in decelerating movement upwards or in accelerating movement downwards, i.e. close to top dead center, mass forces push the lubrication oil to the upper end of the oil chamber and further through the oil channel into the lubrication groove. The invention enables effective lubrication of the piston skirt near top dead center also in engines where jet cooling of piston is used.

According to an embodiment of the invention, the oil delivery duct is an oil delivery pipe that protrudes into the oil chamber from the upper end of the oil chamber, and the inlet of the oil channel is arranged in the wall of the oil chamber above the tip of the oil delivery pipe.

According to another embodiment of the invention, the oil delivery pipe forms part of a throttle that is arranged between the cooling oil gallery and the oil chamber. According to another embodiment of the invention, the throttle comprises a cone-shaped feeding funnel that tapers towards the oil chamber and merges with the oil delivery pipe. According to still another embodiment of the invention, the throttle defines the upper end of the oil chamber. With the throttle arrangement, the oil chamber is filled effectively and back flow into the cooling oil gallery is minimized.

According to an embodiment of the invention, the arrangement comprises a plurality of oil chambers. According to another embodiment of the invention, the arrangement comprises a plurality of oil delivery pipes. According to still another embodiment of the invention, the arrangement comprises a plurality of oil channels. If the lubrication arrangement is provided with several oil channels, lubrication oil can be supplied evenly around the piston skirt. The oil channels can be connected to the same oil chamber, or each oil channel can be connected to an own oil chamber.

### Brief description of the drawings

Fig. 1 shows a piston of an internal combustion engine.
Fig. 2 shows a cross-sectional view of the piston of Fig. 1.
Fig. 3 shows an enlarged view of the detail X in Fig. 2.

### Detailed description of the invention

Embodiments of the invention are now described in more detail with reference to the accompanying drawings.

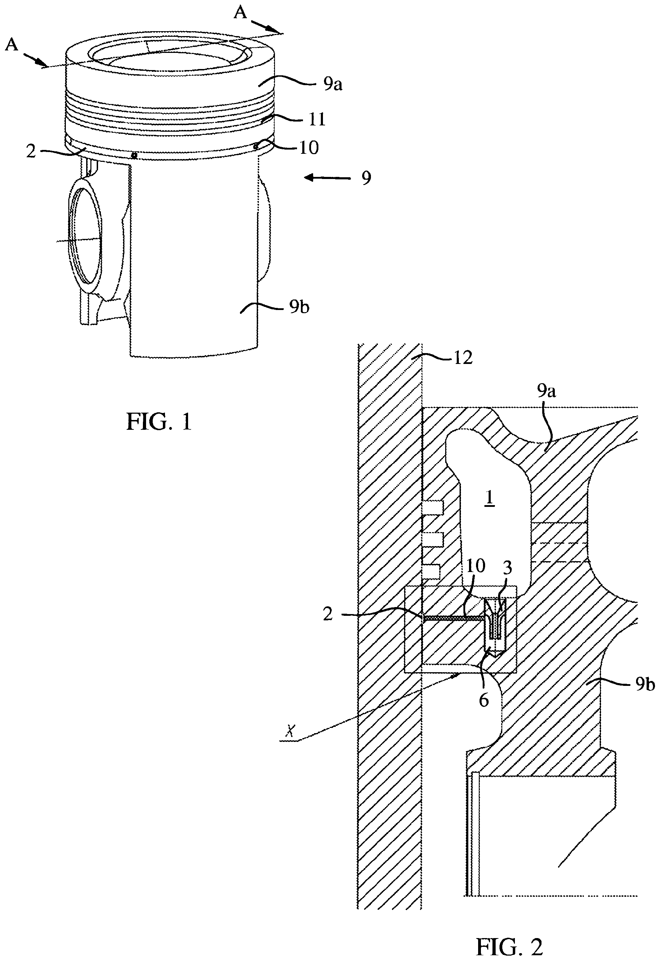

In figure 1 is shown a reciprocating piston 9 of an internal combustion engine. The engine where the piston is used is a large medium or high speed internal combustion engine. The engine can be used, for instance, as a main or an auxiliary engine of a ship, or at a power plant for producing electricity. The engine can be provided with any reasonable number of cylinders, which can be arranged for example in line or in a V-configuration. The piston 9 is arranged inside a cylinder of the engine and surrounded by the wall of a cylinder liner. The piston 9 comprises a piston crown 9a and a piston skirt 9b. The piston crown 9a is provided with conventional piston rings 11. Below the piston rings 11, there is a lubrication groove 2 for supplying lubrication oil between the piston 9 and the cylinder liner. The piston 9 is provided with a plurality of oil channels 10, which open into the lubrication groove 2. Through the oil channels 10, the lubrication oil can be introduced into the lubrication groove 2 for lubricating the inner surface of the cylinder liner and the outer surface of the piston skirt 9b.

Figure 2 shows a cross-sectional view of part of the piston 9 of figure 1. Also part of the cylinder liner 12 is shown. Figure 2 also shows a lubrication arrangement according to an embodiment of the invention. The piston 9 is provided with a cooling oil gallery 1 that is arranged inside the piston 9 between the piston skirt 9b and the piston crown 9a. The cooling oil gallery 1 is a circular chamber that extends around the whole circumference of the piston 9. The engine is provided with a jet cooling arrangement. In a jet cooling arrangement, cooling oil is introduced into the cooling oil gallery 1 by spraying it onto the bottom surface of the piston 9, from where it can enter the cooling oil gallery 1 through drillings (not shown) in the piston skirt 9b. However, the lubrication arrangement according to the invention could also be used in connection with a conventional piston cooling arrangement, where the cooling oil is introduced into the cooling oil gallery 1 through oil channels that are arranged inside the connecting rod, gudgeon pin, and the piston 9.

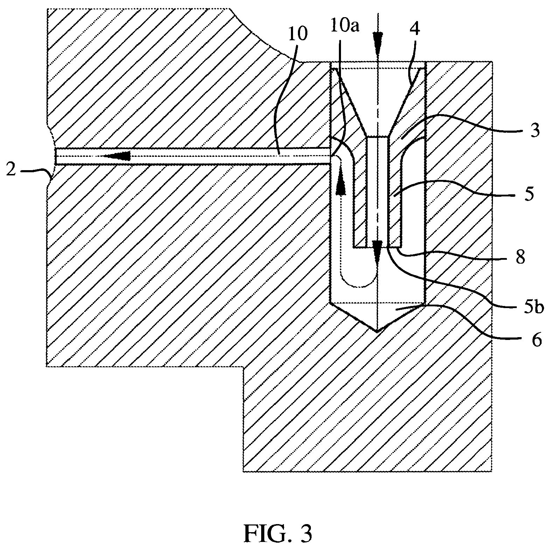

The lubrication oil for lubricating the piston skirt 9b is taken from the cooling oil gallery 1. The piston skirt 9b is provided with a lubrication groove 2 for lubricating the inner surface of the cylinder liner 12 and the outer surface of the piston skirt 9b. The lubrication groove 2 is arranged on the outer surface of the piston skirt 9b in a conventional manner. Lubrication oil is introduced into the lubrication groove 2 through the oil channels 10 that are arranged to go through the wall of the piston skirt 9b. The lubrication oil is introduced into the lubrication groove 2 from oil chambers 6. In the embodiment of the figures, the lubrication arrangement is provided with one oil chamber 6 for each of the oil channels 10. The oil chambers 6 are arranged inside the piston skirt 9b below the cooling oil gallery 1 and around the circumference of the piston skirt 9b. The expression "below" means here that the oil chambers 6 are arranged farther from the top of the piston 9 than the cooling oil gallery 1. The oil chambers 6 are thus closer to the crankshaft than the cooling oil gallery 1. An enlarged view of an oil channel 10 and an oil chamber 6 is shown in figure 3. The inlet 10a of the oil channel 10 is in the wall of the oil chamber 6. In the embodiment of the figures, the oil chamber 6 is a borehole that has been bored from the direction of the upper surface of the piston skirt 9b. The oil chamber 6 is thus open towards the piston crown 9a and closed at the bottom. Instead of a boring, the oil chambers 6 could have some other shape. For instance, the arrangement could be provided with a single oil chamber 6, which could extend around the whole circumference of the piston 9. There could also be several oil channels 10 connected to each of the oil chambers 6.

For introducing the lubrication oil into the oil chamber 6, the lubrication arrangement comprises an oil delivery duct 5. The oil delivery duct 5 is arranged between the cooling oil gallery 1 and the oil chamber 6 for establishing fluid communication between the cooling oil gallery 1 and the oil chamber 6. The inlet 10a of the oil channel 10 that supplies lubrication oil into the lubrication groove 2 is arranged in the oil chamber 6 above the outlet 5b of the oil delivery duct 5. In the embodiment of the figures, the oil delivery duct is an oil delivery pipe 5 that is arranged to protrude into the oil chamber 6 from the upper end of the oil chamber 6. The inlet 10a of the oil channel 10 is arranged above the tip 8 of the oil delivery pipe 5. In the embodiment of the figures, the oil delivery pipe 5 forms part of a throttle 3 that is arranged between the cooling oil gallery 1 and the oil chamber 6. The throttle 3 is arranged in the same borehole that forms the oil chamber 6. The throttle 3 thus also defines the upper end of the oil chamber 6. The upper end of the throttle 3, i.e. the end that is closer to the cooling oil gallery 1, is provided with a cone-shaped feeding funnel 4 that tapers towards the oil chamber 6 and merges with the oil delivery pipe 5.

When the piston 9 is approaching bottom dead center (BDC) and decelerating, mass forces affecting the oil that is in the cooling oil gallery 1 push the oil into the feeding funnel 4 of the throttle 3. From the feeding funnel 4, the oil is pushed further through the oil delivery pipe 5 into the oil chamber 6. More oil is pushed through the throttle 3 into the oil chamber 6 when the piston 9 passes BDC and accelerates. When the piston 9 is approaching top dead center (TDC) and the speed of the piston 9 starts to decrease, mass forces move the oil upwards in the oil chamber 6, i.e. towards the throttle 3. The mass forces push the oil upwards also when the piston 9 has passed TDC and is accelerating. Since the inner diameter of the oil delivery pipe 5 is relatively small compared to the diameter of the oil chamber 6, only a small portion of the oil can escape the oil chamber 6 through the oil delivery pipe 5 and flow back into the cooling oil gallery 1 above the oil chamber 6. Major part of the oil in the oil chamber 6 is collected at the upper end of the oil chamber 6. From the upper end of the oil chamber 6, the oil flows into the oil channel 10 and further into the lubrication groove 2. With a lubrication arrangement according to the invention, the lubrication oil is forced into the lubrication groove 2 when the piston 9 is close to TDC and the lubrication is needed due to the forces acting on the piston 9.

The amount of the lubrication oil that is supplied into the lubrication groove 2 depends on the volume of the oil chamber 6. A larger oil chamber 6 can accommodate more lubrication oil and enables greater oil flow. The amount of the lubrication oil can also be adjusted by the selection of the throttle 3. Larger diameter of the oil delivery pipe 5 leads to quicker filling of the oil chamber 6 and larger amount of lubrication oil.

It will be appreciated by a person skilled in the art that the invention is not limited to the embodiments described above, but may vary within the scope of the appended claims. For instance, the oil delivery duct could be arranged in parallel with the oil chamber, and the outlet of the oil delivery duct could be arranged in the wall of the oil chamber. The inlet of the oil channel does not need to be in the wall of the oil chamber, but it could also be arranged at the upper end of the oil chamber.

## Claims

1. A lubrication arrangement for the skirt (9b) of a piston (9) of an internal combustion engine, which lubrication arrangement comprises
- a cooling oil gallery (1) that is arranged inside the piston (9),
- a lubrication groove (2) that is arranged on the outer surface of the piston skirt (9b),
- at least one oil channel (10) for supplying lubrication oil into the lubrication groove (2),
- at least one oil chamber (6) that is arranged inside the piston (9) below the cooling oil gallery (1), and
- an oil delivery duct (5) for establishing fluid communication between the cooling oil gallery (1) and the oil chamber (6),
the inlet (10a) of the oil channel (10) that supplies lubrication oil into the lubrication groove (2) being arranged in the oil chamber (6) above the outlet (5b) of the oil delivery duct (5),
**characterized in that** the oil delivery duct is an oil delivery pipe (5) that protrudes into the oil chamber (6) from the upper end of the oil chamber (6), and the inlet (10a) of the oil channel (10) is arranged in the wall of the oil chamber (6) above the tip (8) of the oil delivery pipe (5).

2. An arrangement according to claim 1, **characterized in that** the oil delivery pipe (5) forms part of a throttle (3) that is arranged between the cooling oil gallery (1) and the oil chamber (6).

3. An arrangement according to claim 2, **characterized in that** the throttle (3) comprises a cone-shaped feeding funnel (4) that tapers towards the oil chamber (6) and merges with the oil delivery pipe (5).

4. An arrangement according to claim 2 or 3, **characterized in that** the throttle (3) defines the upper end of the oil chamber (6).

5. An arrangement according to any of the preceding claims, **characterized in that** the arrangement comprises a plurality of oil chambers (6).

6. An arrangement according to any of the preceding claims, **characterized in that** the arrangement comprises a plurality of oil delivery pipes (5).

7. An arrangement according to any of the preceding claims, **characterized in that** the arrangement comprises a plurality of oil channels (10).

## Patentansprüche

1. Schmieranordnung für das Hemd (9b) eines Kolbens (9) eines Verbrennungsmotors, wobei die Schmieranordnung Folgendes umfasst:
- eine Kühlölgalerie (1), die innerhalb des Kolbens (9) angeordnet ist,
- eine Schmiernut (2), die auf der Außenfläche des Kolbenhemds (9b) angeordnet ist,
- mindestens einen Ölkanal (10) zur Versorgung der Schmiernut (2) mit Schmieröl,
- mindestens eine Ölkammer (6), die innerhalb des Kolbens (9) unterhalb der Kühlölgalerie (1) angeordnet ist, und
- eine Ölzufuhrleitung (5) zur Herstellung einer Fluidverbindung zwischen der Kühlölgalerie (1) und der Ölkammer (6),
wobei der Einlass (10a) des Ölkanals (10), der das Schmieröl in die Schmiernut (2) einbringt, in der Ölkammer (6) oberhalb des Auslasses (5b) der Ölzufuhrleitung (5) angeordnet ist,
**dadurch gekennzeichnet, dass** die Ölzufuhrleitung ein Ölzufuhrrohr (5) ist, das vom oberen Ende der Ölkammer (6) in die Ölkammer (6) hineinragt, und dass der Einlass (10a) des Ölkanals (10) in der Wand der Ölkammer (6) oberhalb des Endes (8) der Ölzufuhrleitung (5) angeordnet ist.

2. Anordnung nach Anspruch 1, **dadurch gekennzeichnet, dass** die Ölzufuhrleitung (5) einen Teil einer Drosselklappe (3) bildet, die zwischen der Kühlölgalerie (1) und der Ölkammer (6) angeordnet ist.

3. Anordnung nach Anspruch 2, **dadurch gekennzeichnet, dass** die Drosselklappe (3) einen kegelförmigen Zufuhrtrichter (4) aufweist, der sich zur Ölkammer (6) hin verjüngt und in die Ölzufuhrleitung (5) übergeht.

4. Anordnung nach Anspruch 2 oder 3, **dadurch gekennzeichnet, dass** die Drosselklappe (3) ein oberes Ende der Ölkammer (6) festlegt.

5. Anordnung nach einem der vorhergehenden Ansprüche, **dadurch gekennzeichnet, dass** die Anordnung mehrere Ölkammern (6) aufweist.

6. Anordnung nach einem der vorhergehenden Ansprüche, **dadurch gekennzeichnet, dass** die Anordnung mehrere Förderrohre (5) aufweist.

7. Anordnung nach einem der vorhergehenden Ansprüche, **dadurch gekennzeichnet, dass** die Anordnung mehrere Kanäle (10) aufweist.

## Revendications

1. Dispositif de graissage pour la jupe (9b) d'un piston (9) d'un moteur à combustion interne, lequel dispositif de graissage comprend
- une goulotte à huile de refroidissement (1) qui est disposée à l'intérieur du piston (9),
- une gorge de lubrification (2) qui est disposée sur la surface extérieure de la jupe du piston (9b),
- au moins un canal à huile (10) pour apporter de l'huile lubrifiante dans la gorge de lubrification (2),
- au moins une chambre à huile (6) qui est disposée à l'intérieur du piston (9) en-dessous de la goulotte à huile de refroidissement (1), et
- une conduite de délivrance d'huile (5) pour établir une communication de fluide entre la goulotte à huile de refroidissement (1) et la chambre à huile (6),
l'entrée (10a) du canal à huile (10) qui apporte de l'huile lubrifiante dans la gorge de lubrification (2) étant disposée dans la chambre à huile (6) au-dessus de la sortie (5b) de la conduite de délivrance d'huile (5),
**caractérisé en ce que** la conduite de délivrance d'huile est un tuyau de délivrance d'huile (5) qui dépasse dans la chambre à huile (6) depuis l'extrémité supérieure de la chambre à huile (6) et que l'entrée (10a) du canal à huile (10) est disposée dans la paroi de la chambre à huile (6) au-dessus de la pointe (8) du tuyau de délivrance d'huile (5).

2. Dispositif selon la revendication 1, **caractérisé en ce que** le tuyau de délivrance d'huile (5) fait partie d'un étrangleur (3) qui est disposé entre la goulotte d'huile de refroidissement (1) et la chambre à huile (6).

3. Dispositif selon la revendication 2, **caractérisé en ce que** l'étrangleur (3) comprend un entonnoir d'alimentation de forme conique (4) qui se rétrécit en direction de la chambre à huile (6) et se fond avec le tuyau de délivrance d'huile (5).

4. Dispositif selon la revendication 2 ou 3, **caractérisé en ce que** l'étrangleur (3) définit l'extrémité supérieure de la chambre à huile (6).

5. Dispositif selon l'une quelconque des revendications précédentes, **caractérisé en ce que** le dispositif comprend une pluralité de chambres à huile (6).

6. Dispositif selon l'une quelconque des revendications précédentes, **caractérisé en ce que** le dispositif comprend une pluralité de tuyaux de délivrance d'huile (5).

7. Dispositif selon l'une quelconque des revendications précédentes, **caractérisé en ce que** le 8 dispositif comprend une pluralité de canaux à huile (10).
